# EUROPÄISCHE PATENTSCHRIFT

(11) **EP 2 958 785 B1**
(45) Veröffentlichungstag und Bekanntmachung des Hinweises auf die Patenterteilung: **27.09.2017**
(21) Anmeldenummer: 14700438.6
(22) Anmeldetag: 03.01.2014
(51) Int. Cl.: B61B 10/00

(54) **TRANSPORTVORRICHTUNG UND VERFAHREN ZUM BETRIEB DER TRANSPORTVORRICHTUNG**
TRANSPORT DEVICE AND METHOD FOR OPERATING THE TRANSPORT DEVICE
DISPOSITIF DE TRANSPORT ET PROCÉDÉ PERMETTANT DE FAIRE FONCTIONNER UN TEL DISPOSITIF DE TRANSPORT

(30) Priorität: 25.02.2013 DE 102013203066
(43) Veröffentlichungstag der Anmeldung: 30.12.2015
(73) Patentinhaber: Robert Bosch GmbH, 70442 Stuttgart (DE)
(72) Erfinder: VAN DE LOECHT, Heinrich, 76461 Muggensturm (DE); HANISCH, Markus, 70736 Fellbach (DE)
(86) Internationale Anmeldenummer: PCT/EP2014/050037
(87) Internationale Veröffentlichungsnummer: WO 2014/127920

(56) Entgegenhaltungen:
- WO-A1-01/66378
- WO-A2-01/56854
- DE-A1-102010 027 925
- JP-A- H 092 255
- US-A1- 2006 219 128

## Beschreibung

### Stand der Technik

Die vorliegende Erfindung betrifft eine Transportvorrichtung zur Förderung eines Produktes sowie ein Verfahren zum Betrieb der Transportvorrichtung.

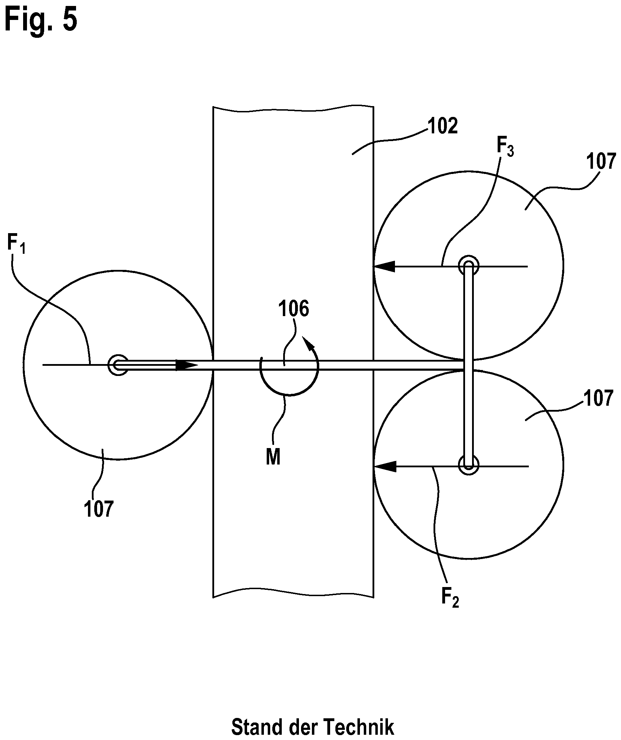

Transportsysteme zur Förderung von Produkten werden beispielsweise bei Förderaufgaben von Verpackungsmaschinen verwendet und sind aus dem Stand der Technik in unterschiedlichen Ausgestaltungen bekannt. Beispielsweise zeigt die DE 10 2010 027 925 A1 ein Transportsystem, bei dem ein bewegbarer Förderwagen mittels einer Linearmotor-Antriebsvorrichtung bewegt wird. Der Förderwagen ist hierbei gelenkig ausgeführt, um kleinere Kurvenradien durchfahren zu können. Allerdings können während des Betriebs Situationen auftreten, in welchen die Förderwägen um ihre Hochachse gieren. Fig. 5 zeigt in schematisch vereinfachter Darstellung, wie dieses Giermoment M im Stand der Technik abgestützt wird. Gemäß Fig. 5 umfasst ein herkömmlicher Förderwagen 106 zumindest drei zueinander versetzte Führungsrollen 107. Diese Führungsrollen 107 rollen auf einer entsprechenden Laufschiene 102 ab. Durch die versetzte Anordnung der Führungsrollen 107 kann das Giermoment M abgestützt werden. In der Anordnung nach dem Stand der Technik dürfen die drei Kräfte F₁, F₂, und F₃ nicht fluchten, damit das Giermoment M in beide Richtungen abgefangen werden kann. Dadurch ergibt sich zwangsläufig eine Mindestbaugröße von größer 2 mal dem Durchmesser der Führungsrollen 107, wenn eine Anordnung in einer Ebene zur Verhinderung parasitärer Momente angestrebt wird. Ferner können die beiden versetzt angeordneten Führungsrollen 107 (auf der rechten Seite in Fig. 5) keine ideale Rollbewegung ausführen, da deren Drehachse nicht durch den Mittelpunkt der Kreisbahn führt. Dies führt zu einer Querbewegung der Führungsrollen 107 und somit zu einem relativ hohen Verschleiß und einem frühzeitigen Versagen. Dabei werden unnötig viele Partikel abgerieben, die insbesondere im Bereich der Lebensmittel-und Pharmaproduktion bzw. Lebensmittel- und Pharmaverpackung nicht erwünscht sind. Ein gattungsgemäßes Transportsystem ist aus der WO 01/66378 A1 bekannt. Entsprechende Schienen umfassen einen Kern, der mit einer Vielzahl von Spulen umgeben ist.

### Offenbarung der Erfindung

Die Transportvorrichtung gemäß den Merkmalen des Anspruchs 1 ermöglicht einen sehr kompakten und leichten Aufbau des Förderwagens. Mit dem leichten Aufbau geht auch eine energetisch sinnvolle Konstruktion der Transportvorrichtung einher, da möglichst geringe Massen bewegt werden müssen. Da erfindungsgemäß die Führungsrollen nicht mehr versetzt angeordnet sind, können die Führungsrollen optimal abrollen und weisen somit einen möglichst geringen Verschleiß auf. Dadurch steigt die Lebensdauer der Führungsrollen und gleichzeitig werden möglichst wenig Partikel durch Abrieb generiert. Diese Vorteile werden erreicht durch eine Transportvorrichtung, umfassend eine ortsfeste, sich entlang einer Längsachse erstreckende Laufschiene und zumindest einen auf der Laufschiene geführten Förderwagen. Der Förderwagen weist Führungsrollen auf. Insbesondere sind zwei Führungsrollen vorgesehen. Die Führungsrollen sind drehbar am Förderwagen angeordnet. Die Drehachsen der Führungsrollen stehen parallel zur Hochachse des Förderwagens. Die Hochachse ist senkrecht zur Längsachse definiert. Eine Querachse ist sowohl senkrecht zur Längsachse als auch senkrecht zur Hochachse definiert. Die Drehachsen aller Führungsrollen schneiden die selbe Gerade. Diese Gerade ist senkrecht zur Längsachse definiert und erstreckt sich in Querrichtung. Die Gerade ist bei einer ideellen Betrachtungsweise senkrecht zur Längsachse ausgerichtet. Sobald ein geringes Giermoment um die Hochachse auftritt, welches nicht sofort kompensiert wird, lenkt die imaginäre Gerade etwas aus. Entscheidend ist jedoch, dass erfindungsgemäß vorgesehen ist, dass ein Giermoment um die Hochachse nicht durch die Anordnung versetzter Führungsrollen abgestützt wird. Die Transportvorrichtung umfasst des Weiteren eine Ausgleichsvorrichtung zum Ausgleichen des Giermomentes des Förderwagens um die Hochachse. Diese Ausgleichsvorrichtung umfasst mehrere entlang der Laufschiene angeordnete Magnetspulen und zumindest zwei am Förderwagen angeordnete ferromagnetische oder permanent magnetische Gegenelemente. Diese Gegenelemente sind beidseitig der Laufschiene angeordnet. Des Weiteren umfasst die Ausgleichsvorrichtung ein Steuergerät zum Ansteuern der Magnetspulen. Die Magnetspulen werden dabei so angesteuert, dass die Gegenelemente in Richtung der Querachse gleichzeitig von der Laufschiene weggedrückt werden. Dieses Abstoßen der beiden gegenüberliegenden Gegenelemente von der Laufschiene führt zu einer Abstützung des Giermomentes und somit zu einer mittigen Ausrichtung des Förderwagens. Die hier genutzten magnetischen Kräfte erhöhen sich quadratisch umgekehrt proportional zum Abstand. Das heißt, je weiter sich der Förderwagen durch ein auftretendes Giermoment verdreht, umso stärker wirkt die entsprechende Kraft auf das sich der Laufschiene annähernde Gegenelement. Es bedarf somit keiner aufwändigen Regelung der Ansteuerung der Magnetspulen, da sich die auftretende Kraft quadratisch umgekehrt proportional zum Abstand verhält.

Insbesondere ist für die Transportvorrichtung ein magnetischer Antrieb vorgesehen. Dieser magnetische Antrieb umfasst ortsfeste Primärmagneten, beispielsweise ausgebildet als Elektromagneten, und mit den Primärmagneten wechselwirkende Sekundärmagneten. Die Sekundärmagneten sind am Förderwagen angeordnet. Insbesondere ist vorgesehen, dass die Sekundärmagneten lediglich für den Antrieb nutzbar sind und die Gegenelemente lediglich für die Ausgleichsvorrichtung nutzbar sind.

Um einen möglichst kompakten Aufbau der ortsfesten Laufschiene zu erreichen, werden erfindungsgemäß die Magnetspulen der Ausgleichsvorrichtung gleichzeitig als Primärmagneten des magnetischen Antriebs genutzt. Dies wird durch eine entsprechend Ansteuerung bzw. Bestromung der Magnetspulen erreicht.

Des Weiteren ist vorgesehen, dass die Gegenelemente in Richtung der Längsachse vor und/oder nach der Geraden, die von den Drehachsen der Führungsrollen geschnitten wird, angeordnet sind. Durch einen entsprechend großen Abstand der Gegenelemente von dieser Geraden, kann der Hebel für den Giermomentenausgleich eingestellt werden.

Die Gegenelemente sind bevorzugt als Permanentmagneten ausgebildet. Für die Ausrichtung der Permanentmagneten gibt es zwei Varianten: In der ersten Variante sind auf beiden Seiten der Laufschiene die Südpole der Gegenelemente zu den Magnetspulen hin ausgerichtet, oder es sind auf beiden Seiten der Laufschiene die Nordpole der Gegenelemente zu den Magnetspulen hin ausgerichtet. In dieser ersten Variante gibt es eine abstoßende Kraft auf die Gegenelemente, selbst wenn die Magnetspule nicht bestromt ist.

In der zweiten Variante ist auf einer Seite der Laufschiene der Südpol des Gegenelementes zu den Magnetspulen hin ausgerichtet und auf der anderen Seite der Laufschiene ist der Nordpol des Gegenelements zu den Magnetspulen hin ausgerichtet. In diesem Fall bedarf es stets einer Bestromung der Magnetspule, um eine abstoßende Kraft auf die Gegenelemente zu erzeugen.

Anstatt zweier separater Gegenelemente, kann bevorzugt ein Rückschlusselement verwendet werden. Das Rückschlusselement ist ferromagnetisch und U- oder C-förmig ausgestaltet. Das Rückschlusselement umgreift dabei die Laufschienen, so dass die Enden des Rückschlusselementes beidseitig der Laufschiene angeordnet sind. Die beiden Gegenelemente sind somit in das Rückschlusselement integriert bzw. durch das Rückschlusselement gebildet. In das Rückschlusselement wird vorzugsweise ein Permanentmagnet eingesetzt um auf den beiden Seiten der Laufschiene einen Süd- und einen Nordpol zu erzeugen.

Die Erfindung umfasst des Weiteren ein Verfahren zum Betrieb der Transportvorrichtung, wie sie soeben beschrieben wurde. In dem Verfahren ist vorgesehen, dass die Gegenelemente so ausgerichtet werden und/oder die Magnetspulen so bestromt werden, dass die Gegenelemente von den Magnetspulen abgestoßen werden.

Wenn zusätzlich ein Antrieb für den Förderwagen vorgesehen ist, werden für den Antrieb die Primärmagneten des Antriebs so bestromt, dass die Gegenelemente der Ausgleichsvorrichtung und/oder die Sekundärmagneten des Antriebs von den Primärmagneten angezogen werden. Es können somit die Gegenelemente der Ausgleichsvorrichtung auch gleichzeitig für den Antrieb genutzt werden. Für die Ausgleichsvorrichtung wird insbesondere die erste oder letzte Spule bestromt, die noch im Bereich des Förderwagens liegt.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: eine schematisch vereinfachte Ansicht einer erfindungsgemäßen Transportvorrichtung gemäß einem ersten Ausführungsbeispiel,
- Figur 2: eine weitere schematisch vereinfachte Ansicht der erfindungsgemäßen Transportvorrichtung gemäß dem ersten Ausführungsbeispiel,
- Figur 3: eine Detailansicht der erfindungsgemäßen Transportvorrichtung gemäß dem ersten Ausführungsbeispiel,
- Figur 4: Details der erfindungsgemäßen Transportvorrichtung gemäß einem zweiten Ausführungsbeispiel, und
- Figur 5: eine schematische Ansicht einer Transportvorrichtung nach dem Stand der Technik.

### Ausführungsformen der Erfindung

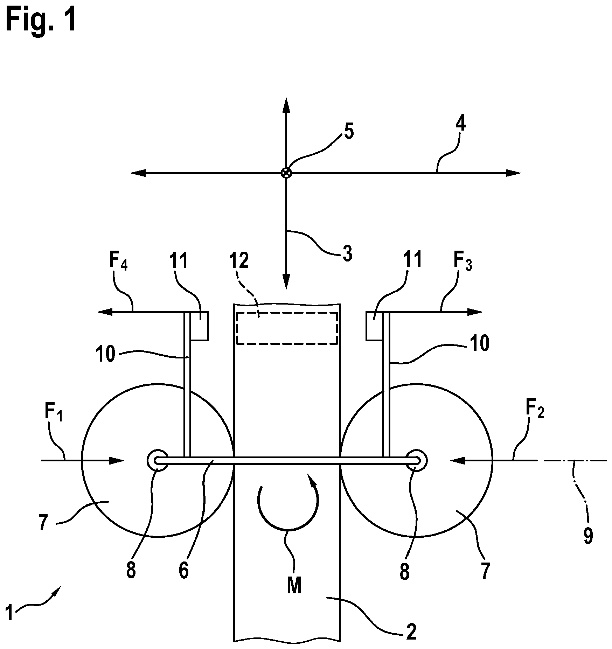

Figur 1 zeigt in schematisch vereinfachter Darstellung die Transportvorrichtung 1. Die Transportvorrichtung 1 umfasst eine ortsfeste Laufschiene 2. Auf der Laufschiene 2 ist ein Förderwagen 6 geführt. Die Laufschiene 2 erstreckt sich entlang einer Längsachse 3. In Richtung der Längsachse 3 ist der Förderwagen 6 linear beweglich. Senkrecht zur Längsachse 3 ist eine Querachse 4 definiert. Senkrecht zur Querachse 4 und senkrecht zur Längsachse 3 ist eine Hochachse 5 definiert. Das Moment des Förderwagens 6 um die Hochachse 5 wird als Giermoment M bezeichnet.

Der Förderwagen 6 weist zwei Führungsrollen 7 auf. Jede Führungsrolle 7 ist um eine Drehachse 8 drehbeweglich am Förderwagen 6 gelagert. Die beiden Drehachsen 8 schneiden eine Gerade 9. Die Gerade 9 ist bei mittiger Ausrichtung des Förderwagens 6 senkrecht zur Längsachse 3 definiert. Durch diese fluchtende Anordnung der Führungsrollen 7 fluchten auch die beiden Kräfte F₁ und F₂ zur Abstützung des Förderwagens 6 über die Führungsrollen 7. Da die Kräfte F₁ und F₂ fluchten, ist eine zusätzliche Ausgleichsvorrichtung zum Ausgleichen des Giermomentes M vorgesehen.

Diese Ausgleichsvorrichtung umfasst zwei Ausleger 10, die sich in Längsrichtung erstrecken. An diesen beiden Auslegern 10 sind Gegenelemente 11 vorgesehen. Die Gegenelemente 11 sind beidseitig der Laufschiene 2 angeordnet und als Permanentmagneten ausgebildet. An oder in der Laufschiene 2 befinden sich mehrere Magnetspulen 12. Durch Bestromen dieser Magnetspulen 12 werden die Gegenelemente 10 von der Laufschiene 2 in Richtung der Querachse 4 weggedrückt.

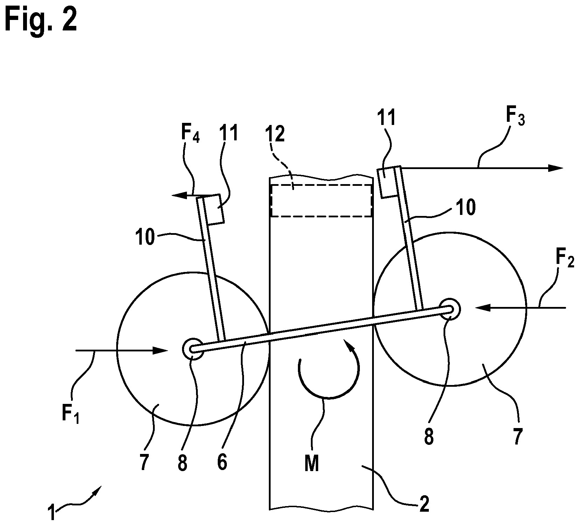

Figur 2 zeigt einen Zustand, in dem der Förderwagen 6 durch das Giermoment M verdreht ist. In diesem Fall steigt die auf das rechte Gegenelement 11 wirkende Kraft F₃. Die Kraft F₃ führt zu einem Abstützen des Giermomentes M, so dass wieder die Gleichgewichtsstellung, gemäß Figur 1, entsteht.

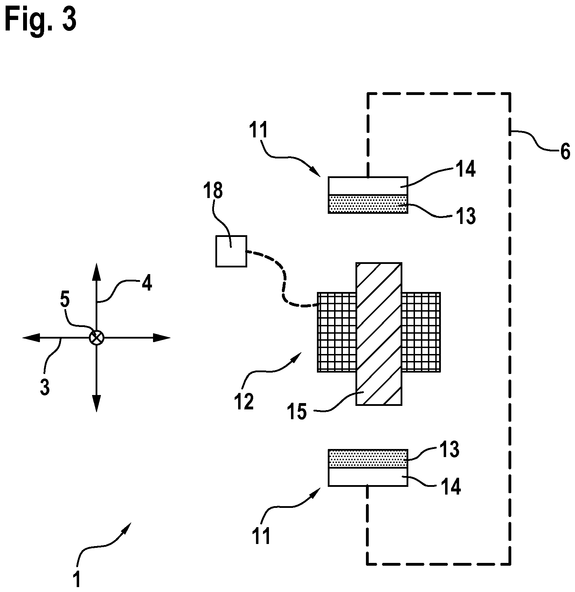

Figur 3 zeigt, ebenfalls schematisch vereinfacht, Details der Transportvorrichtung 1. In Figur 3 sind die beiden Gegenelemente 11 im Detail gezeigt. Der restliche Förderwagen 6 ist lediglich als gestrichelte Linie dargestellt. Die Laufschiene 2 ist ausgeblendet. Zu sehen ist lediglich eine der Magnetspulen 12.

Die beiden Gegenelemente 11 weisen jeweils einen Nordpol 13 und einen Südpol 14 auf. Die Gegenelemente 11 sind so angeordnet, dass die beiden Nordpole 13 zur Magnetspule 12 hinzeigen. Die Magnetspule 12 umfasst einen Eisenkern 15.

Mittels eines Steuergerätes 18 werden die entlang der Laufschiene 2 verteilten Magnetspulen 12 angesteuert bzw. bestromt.

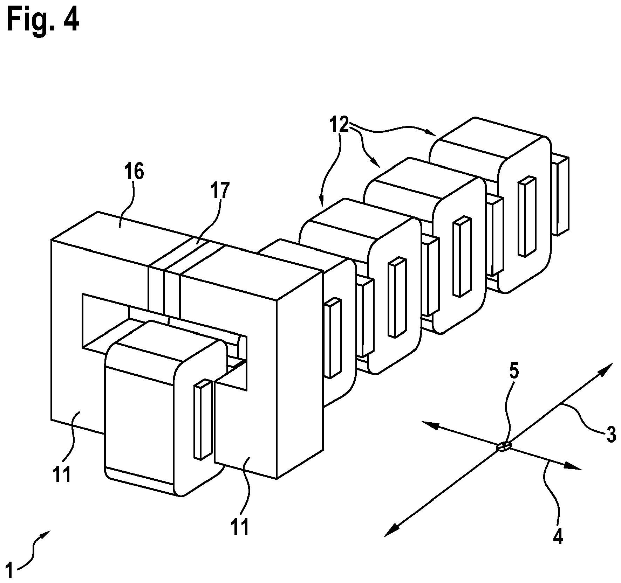

Alternativ zur Anordnung analog Figur 3 kann die Spule auch als Luftspule ausgeführt werden, was eine deutliche Verringerung der parasitären Anziehung zur Folge hat, sollten die Magneten analog Figur 4 angeordnet sein. Auch in diesem Fall wäre eine dauernde Bestromung zwingend, um den Ausgleich des Giermomentes zu erreichen.

Figur 4 zeigt Details der Transportvorrichtung 1 gemäß dem zweiten Ausführungsbeispiel. In Figur 4 ist die Laufschiene 2 ausgeblendet. Zu sehen sind die aneinandergereihten Magnetspulen 12.

Des Weiteren zeigt Figur 4 ein Rückschlusselement 16 als Bestandteil des Förderwagens 6. Dieses Rückschlusselement 16 besteht aus einem ferromagnetischen Material, insbesondere aus Eisen und ist U- oder C-förmig gebogen. Die Enden des Rückschlusselementes 16 befinden sich beidseitig der Laufschiene 2 und stellen die beiden Gegenelemente 11 dar. In das Rückschlusselement 16 ist ein Permanentmagnet 17 eingesetzt.

## Patentansprüche

1. Transportvorrichtung (1) zur Förderung eines Produktes, umfassend
- eine ortsfeste, sich entlang einer Längsachse (3) erstreckende Laufschiene (2),
- einen auf der Laufschiene (2) geführten Förderwagen (6) mit einer zur Längsachse (3) senkrechten Hochachse (5),
- am Förderwagen (6) angeordnete Führungsrollen (7), die um zur Längsachse (3) senkrechte Drehachsen (8) drehbar sind und auf der Laufschiene (2) abrollen, wobei die Drehachsen (8) aller Führungsrollen (7) die selbe, zur Längsachse (3) senkrechte Gerade (9) schneiden, und
- eine Ausgleichsvorrichtung zum Ausgleichen eines Giermomentes (M) des Förderwagens (6) um die Hochachse (5) mit
o mehreren entlang der Laufschiene (2) angeordneten Magnetspulen (12),
o zumindest zwei am Förderwagen (6) angeordneten ferromagnetischen oder permanentmagnetischen Gegenelementen (11), die beidseitig der Laufschiene (2) angeordnet sind, und
o einem Steuergerät (18) zum Ansteuern der Magnetspulen (12), so dass die Gegenelemente (11) in Richtung einer Querachse (4) gleichzeitig von der Laufschiene (2) wegdrückbar sind, wobei die Querachse (4) senkrecht zur Längsachse (3) und senkrecht zur Hochachse (5) definiert ist,
- einen magnetischen Antrieb mit ortsfesten Primärmagneten und am Förderwagen (6) angeordneten, mit den Primärmagneten wechselwirkenden Sekundärmagneten, wobei die Sekundärmagneten lediglich für den Antrieb nutzbar sind und die Gegenelemente (11) lediglich für die Ausgleichsvorrichtung nutzbar sind **dadurch gekennzeichnet, dass** die Magnetspulen (12) der Ausgleichsvorrichtung als Primärmagneten des magnetischen Antriebs nutzbar sind.

2. Transportvorrichtung nach Anspruch 1, **dadurch gekennzeichnet, dass** für die Primärmagneten eigene, von der Ausgleichsvorrichtung unabhängige Spulen angeordnet sind.

3. Transportvorrichtung nach einem der vorhergehenden Ansprüche, **dadurch gekennzeichnet, dass** die Gegenelemente (11) in Richtung der Längsachse (3) vor und/oder nach der Geraden (9), die von den Drehachsen (8) der Führungsrollen (7) geschnitten wird, angeordnet sind.

4. Transportvorrichtung nach einem der vorhergehenden Ansprüche, **dadurch gekennzeichnet, dass** die Gegenelemente (11) Permanentmagneten sind, wobei auf beiden Seiten der Laufschiene (2) die Südpole (14) der Gegenelemente (11) zu den Magnetspulen (12) hin ausgerichtet sind, oder wobei auf beiden Seiten der Laufschiene (2) die Nordpole (13) der Gegenelemente (11) zu den Magnetspulen (12) hin ausgerichtet sind.

5. Transportvorrichtung nach einem der Ansprüche 1 bis 3, **dadurch gekennzeichnet, dass** die Gegenelemente (11) Permanentmagneten sind, wobei auf einer Seiten der Laufschiene (2) der Südpole (14) des Gegenelements (11) zu den Magnetspulen (12) hin ausgerichtet ist und auf der anderen Seiten der Laufschiene (2) der Nordpol (13) des Gegenelements (11) zu den Magnetspulen (12) hin ausgerichtet ist.

6. Transportvorrichtung nach einem der vorhergehenden Ansprüche, **dadurch gekennzeichnet, dass** die Gegenelemente (11) in ein ferromagnetisches, U- oder C- förmiges, die Laufschiene (2) umgreifendes Rückschlusselement (16) integriert sind.

7. Verfahren zum Betrieb der Transportvorrichtung nach einem der vorhergehenden Ansprüche, wobei die Gegenelemente (11) so ausgerichtet werden und/oder die Magnetspulen (12) so bestromt werden, dass die Gegenelemente (11) von den Magnetspulen (12) abgestoßen werden.

8. Verfahren nach Anspruch 7 **dadurch gekennzeichnet, dass** zum Antrieb des Förderwagens die Primärmagneten des Antriebs so bestromt werden, dass die Gegenelemente (11) der Ausgleichsvorrichtung und/oder die Sekundärmagneten des Antriebs von den Primärmagneten angezogen werden.

## Claims

1. Transport device (1) for conveying a product, comprising
- a positionally fixed running rail (2) extending along a longitudinal axis (3),
- a trolley (6) which is guided on the running rail (2) and has a vertical axis (5) perpendicular to the longitudinal axis (3),
- guide rollers (7) which are arranged on the trolley (6), are rotatable about axes of rotation (8) which are perpendicular to the longitudinal axis (3), and roll on the running rail (2), wherein the axes of rotation (8) of all of the guide rollers (7) intersect the same straight line (9) which is perpendicular to the longitudinal axis (3), and
- a compensating device for compensating for a yawing moment (M) of the trolley (6) about the vertical axis (5), having
∘ a plurality of magnet coils (12) arranged along the running rail (2),
∘ at least two ferromagnetic or permanently magnetic counter elements (11) which are arranged on the trolley (6) and are arranged on both sides of the running rail (2), and
∘ a control unit (18) for activating the magnet coils (12) such that the counter elements (11) are simultaneously pushable away from the running rail (2) in the direction of a transverse axis (4), wherein the transverse axis (4) is defined perpendicularly to the longitudinal axis (3) and perpendicularly to the vertical axis (5),
- a magnetic drive with positionally fixed primary magnets and secondary magnets which are arranged on the trolley (6) and interact with the primary magnets, wherein the secondary magnets are useable only for the drive, and the counter elements (11) are useable only for the compensating device, **characterized in that** the magnet coils (12) of the compensating device are useable as primary magnets of the magnetic drive.

2. Transport device according to Claim 1, **characterized in that** dedicated coils which are independent of the compensating device are arranged for the primary magnets.

3. Transport device according to either of the preceding claims, **characterized in that** the counter elements (11) are arranged in the direction of the longitudinal axis (3) upstream and/or downstream of the straight line (9) which is intersected by the axes of rotation (8) of the guide rollers (7).

4. Transport device according to one of the preceding claims, **characterized in that** the counter elements (11) are permanent magnets, wherein on both sides of the running rail (2), the south poles (14) of the counter elements (11) are oriented towards the magnet coils (12), or wherein, on both sides of the running rail (2), the north poles (13) of the counter elements (11) are oriented towards the magnet coils (12).

5. Transport device according to one of Claims 1 to 3, **characterized in that** the counter elements (11) are permanent magnets, wherein, on one sides of the running rail (2), the south poles (14) of the counter element (11) is oriented towards the magnet coils (12), and, on the other sides of the running rail (2), the north pole (13) of the counter element (11) is oriented towards the magnet coils (12).

6. Transport device,according to one of the preceding claims, **characterized in that** the counter elements (11) are integrated in a ferromagnetic, U- or C-shaped feedback element (16) engaging around the running rail (2).

7. Method for operating the transport device according to one of the preceding claims, wherein the counter elements (11) are oriented in such a manner and/or the magnet coils (12) are energized in such a manner that the counter elements (11) are repelled by the magnet coils (12).

8. Method according to Claim 7, **characterized in that**, in order to drive the trolley, the primary magnets of the drive are energized in such a manner that the counter elements (11) of the compensating device and/or the secondary magnets of the drive are attracted by the primary magnets.

## Revendications

1. Dispositif de transport (1) pour le transport d'un produit, comprenant
- un rail de roulement fixe (2), s'étendant le long d'un axe longitudinal (3),
- un chariot de transport (6) guidé sur le rail de roulement (2), avec un axe vertical (5) perpendiculaire à l'axe longitudinal (3),
- des rouleaux de guidage (7) disposés sur le chariot de transport (6), qui peuvent tourner autour d'axes de rotation (8) perpendiculaires à l'axe longitudinal (3) et qui roulent sur le rail de roulement (2), dans lequel les axes de rotation (8) de tous les rouleaux de guidage (7) coupent la même droite (9) perpendiculaire à l'axe longitudinal (3), et
- un dispositif de compensation pour compenser le couple de lacet (M) du chariot de transport (6) autour de l'axe vertical (5), avec
∘ plusieurs bobines magnétiques (12) disposées le long du rail de roulement (2),
∘ au moins deux éléments opposés ferromagnétiques ou magnétiques permanents (11) disposés sur le chariot de transport (6), qui sont disposés de part et d'autre du rail de roulement (2), et
∘ un appareil de commande (18) pour activer les bobines magnétiques (12), de telle manière que les éléments opposés (11) puissent être écartés du rail de roulement (2) simultanément dans la direction d'un axe transversal (4), dans lequel l'axe transversal (4) est défini perpendiculairement à l'axe longitudinal (3) et perpendiculairement à l'axe vertical (5),
- une propulsion magnétique avec des aimants primaires fixes et des aimants secondaires disposés sur le chariot de transport (6), qui interagissent avec les aimants primaires, dans lequel les aimants secondaires ne sont utilisables que pour la propulsion et les éléments opposés (11) ne sont utilisables que pour le dispositif de compensation,
**caractérisé en ce que** les bobines magnétiques (12) du dispositif de compensation sont utilisables comme aimants primaires de la propulsion magnétique.

2. Dispositif de transport selon la revendication 1, **caractérisé en ce que** des bobines particulières, indépendantes du dispositif de compensation, sont disposées pour les aimants primaires.

3. Dispositif de transport selon l'une quelconque des revendications précédentes, **caractérisé en ce que** les éléments opposés (11) sont disposés, dans la direction de l'axe longitudinal (3), avant et/ou après la droite (9) qui est coupée par les axes de rotation (8) des rouleaux de guidage (7).

4. Dispositif de transport selon l'une quelconque des revendications précédentes, **caractérisé en ce que** les éléments opposés (11) sont des aimants permanents, dans lequel les pôles Sud (14) des éléments opposés (11) sont orientés sur les deux côtés du rail de roulement (2) en direction des bobines magnétiques (12), ou dans lequel les pôles Nord (13) des éléments opposés (11) sont orientés sur les deux côtés du rail de roulement (2) en direction des bobines magnétiques (12).

5. Dispositif de transport selon l'une quelconque des revendications 1 à 3, **caractérisé en ce que** les éléments opposés (11) sont des aimants permanents, dans lequel le pôles Sud (14) de l'élément opposé (11) est orienté sur un côtés du rail de roulement (2) en direction des bobines magnétiques (12) et le pôle Nord (13) de l'élément opposé (11) est orienté sur l'autre côtés du rail de roulement (2) en direction des bobines magnétiques (12).

6. Dispositif de transport selon l'une quelconque des revendications précédentes, **caractérisé en ce que** les éléments opposés (11) sont intégrés dans un élément de culasse de reflux (16) ferromagnétique, en forme de U ou de C, entourant le rail de roulement (2).

7. Procédé permettant de faire fonctionner un dispositif de transport selon l'une quelconque des revendications précédentes, dans lequel on oriente les éléments opposés (11) et/ou on alimente les bobines magnétiques (12) de telle manière que les éléments opposés (11) soient repoussés par les bobines magnétiques (12).

8. Procédé selon la revendication 7, **caractérisé en ce que** pour la propulsion du chariot de transport on alimente les aimants primaires de la propulsion de telle manière que les éléments opposés (11) du dispositif de compensation et/ou les aimants secondaires de la propulsion soient attirés par les aimants primaires.
